# EUROPEAN PATENT APPLICATION

(11) **EP 4 527 188 A1**
(43) Date of publication of application: **26.03.2025**
(21) Application number: 24201634.3
(22) Date of filing: 20.09.2024
(51) Int. Cl.: A01G 20/47, E01H 1/08, E01H 5/10

(54) **PORTABLE LEAF BLOWER WITH SNOW BLOWER FUNCTION AND MODIFICATION KIT**

(30) Priority: 21.09.2023 IT 202300019386
(71) Applicant: R.I.E di Cassani Davide Franco E C. SNC, 26013 Crema (IT)
(72) Inventor: CASSANI, Davide Franco, 26010 Bagnolo Cremasco (IT)
(74) Representative: Giraldi, Elisa

(57) **Abstract**

A blower, also adapted for blowing and melting the snow, comprises a machine body (100,Z), to which a leaf-blower tube (110) can be connected, wherein a motor (102,220) is present in the machine body (100,Z) provided with a fan (14,104,204) adapted to generate an air current, wherein said blower, by means of the fan (14,104,204) actuated by the motor (102,220), generates an air flow, which, passing through the leaf-blower tube (120,209), is heated by the contact with a resistor (RE) comprised in an accessory (180), wherein said accessory (180) is in the form of a nozzle (182) with a tubular attachment (184) with an adjustable ring nut to be installed on the free end of the leaf-blower tube (110).

## Description

### FIELD OF THE INVENTION

The present invention relates to the field of portable leaf-blowers, and in particular it relates to a blower adapted for blowing and melting snow.

The present invention also relates to a corresponding modification kit to adapt existing portable blowers already on the market or already purchased by users to a new operation.

### PRIOR ART

In the prior art, it is known to use tools, such as a blowers/vacuum-shredders, to collect leaves fallen from trees. These tools make it possible to gather or collect the leaves fast, speeding up the work that would otherwise be done using a rake or broom.

A blower is an electrically powered tool which, by virtue of a powerful jet of air, makes it possible to move dry leaves fallen from trees to gather them into a pile and then collect them. The leaves gathered in piles can then be later collected, e.g., to be placed in a compost bin or disposed of in mowing containers.

Some blowers also have a vacuum feature which allows leaves to be sucked into a bag, like conventional vacuum cleaners.

Furthermore, there are blower tools on the market provided with a shredding feature, which allows the leaves to be shredded before accumulating them inside the collection bag. In this manner, the leaves reduced to a small size take up less space in the collection bag, and a larger area can be cleaned without having to empty the collection bag frequently while working.

Corded or rechargeable battery versions of the aforesaid blowers, from the simplest to the most complete, are available on the market.

There are also blowers with a gasoline-fueled heat engine, for applications requiring more power and range for use in gardens and over larger areas.

Some more sophisticated blowers are also capable of vacuuming wet leaves. These leaf-blowers have been used in the past to blow away freshly fallen snow, e.g., from car roofs or windshields or small stretches of driveways. These tools only work well when the snow is dry and light or powdery, e.g., when it has just fallen, and are unsuitable for wet snow or heavy or icy snow.

Document US2016/235012 A1 describes an air blower which, in the first operating mode, produces an air flow, the temperature of which is approximately equal to that of the surrounding environment, and in the second operating mode, it produces an air flow, the temperature of which is higher than that of the surrounding environment. Document US2009/307936 A1 describes a snow and ice removal apparatus provided with a heating element.

Document US2020071895 A1 describes a snow shovel apparatus consisting of a tubular attachment for a leaf-blower and comprising an attachment end and a snow shovel end.

### SUMMARY OF THE INVENTION

The object of the invention was achieved by a portable leaf-blower having the features defined in claim 1.

The invention further relates to a modification kit for a portable leaf-blower according to claim 5.

### BRIEF DESCRIPTION OF THE FIGURES

Hereafter in this description, reference will be made to the drawings shown in the accompanying figures, in which:
- Figure 1 shows a leaf-blower,
- Figure 2 shows a leaf-blower according to the present invention,
- Figure 3 shows particular embodiments of the snow-blower tube in Figure 2,
- Figure 4 shows a first leaf-blower modification kit,
- Figure 5 shows a second leaf-blower modification kit with accessory,
- Figure 6 shows the modification kit in figure 5 applied to a leaf-blower,
- Figure 7 shows an example of a blower having batteries transported in a backpack, and
- Figure 8 shows an example of a blower having the modification kit in Figures 5 and 6 and with batteries transported a backpack.

The parts according to the present description are represented in the drawings, where suitable, employing conventional symbols, showing only the specific details allowing the understanding of the embodiments of the present invention, so as not to highlight details which will be immediately apparent to the person skilled in the art, with reference to the description provided below.

### DETAILED DESCRIPTION OF THE INVENTION

The solution according to the present invention will now be described with the help of drawings.

In particular, the solution suggested here stems from the need to find an alternative solution for snow removal, e.g., from roads, sidewalks, or driveways, which make it possible to avoid the use of a shovel.

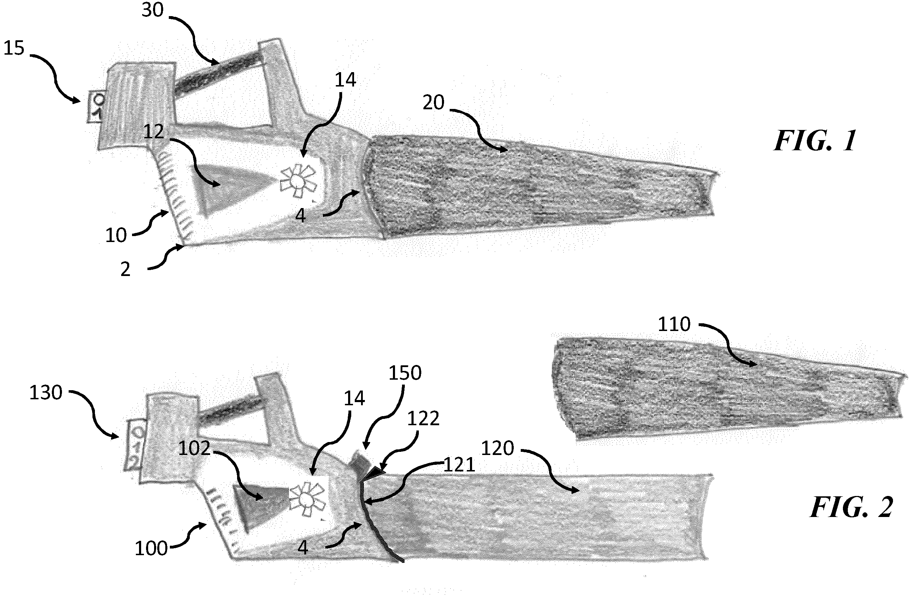

Referring to Figure 1, the leaf-blowers comprise a machine body 10 and a blower tube 20 for conveying air. A handle or grip 30 is provided on the machine body 10 and there may also be a shoulder strap or supporting harness (not shown).

A motor 12 is present in the machine body 10, which can be either an internal combustion engine, a corded or battery-powered electric motor. The motor 12 further comprises a fan 14 adapted to generate an air current.

In particular, in conventional blowers, the motor 12 sucks air from a first opening 2 at the back of the machine body 10 and sends it through a second opening 4 to the blower tube 20.

If the blower also has a vacuum feature, the suction tube is connected to the first opening 2 and the collection bag is connected to the second opening 4.

As mentioned above, the blower can be corded or battery powered.

The blower has a switch 15 to turn it on.

In the first case, the range is unlimited, but the electric cable generates problems of freedom of movement and limits the movements during use.

Conversely, in the case of battery-powered blowers, there are problems of limited autonomy but the user is free to move around without the constraints caused by the presence of the power cable.

Some parts of the blower must be modified in order to use these blowers to remove snow, with any snow conditions, i.e., also wet, heavy or frozen snow.

As mentioned, conventional leaf-blowers can be used in case of freshly fallen snow in situations where the snow is dry and light.

In the case of wet or icy heavy snow, a different tool must be provided.

In particular, it is possible to consider making a blower with dual operation: as a leaf-blower or a snow blower.

In this case, there will be one body and two different tubes, according to the use. In the case of use as a leaf-blower, the tube is the conventional one, e.g., a blower cone.

Conversely, in the case of use as a snow blower, the tube is modified and has an electrical resistor inside it to heat the air generated by the motor fan.

In this manner, the air blown from the tube comes out at a higher temperature and melts the snow, clearing the surface from snow.

As shown in Figure 2, the blower according to the present invention comprises a machine body 100 to which a leaf-blower tube 110 or a snow-blower tube 120 can be connected.

A power supply AL must be provided to supply current to the resistor RE. As can be seen in Figure 2, the snow-blower tube 120 is cylindrical and has a first connector (not shown) to bring current AL to the resistor RE, while the leaf-blower tube 110 has a conical end portion.

A motor 102 is present in the machine body 100, which can be either an internal combustion engine, a corded or battery-powered electric motor. The motor 102 further comprises a fan 104 adapted to generate an air current.

There is a selection switch 130 on the machine body 100 to select the type of operation (leaves/snow).

The selection switch 130 has three positions, in particular, position "0" of the switch corresponds to blower off, position "1" of the switch corresponds to use as leaf-blower, and position "2" of the switch corresponds to use as snow blower.

There is a safety microswitch 150 on the machine body 100, which is activated by the snow blower tube 120, but not by the leaf-blower tube 110. Furthermore, there is a corresponding second connector on the machine body 100, which plugs into the first connector on the snow-blower tube 120 to supply current to the resistor RE. Indeed, the snow-blower tube 120 is provided with an activation element 122, e.g., a lever 122, which allows the safety microswitch 150 to be activated during the insertion of the snow-blower tube 120 on the machine body 100.

In particular, the activation lever 122 is arranged on the connection end 121 of the snow-blower tube 120 to the machine cover 100. During the insertion of the snow-blower tube 120 on the machine body 100, the activation lever 122 moves the safety switch 150 to the active position, which allows the resistor R inside the snow-blower tube 120 to be turned on.

Therefore, positioning the selection switch 130 to position "2" supplies current, by means of the safety microswitch 150, to the resistor R.

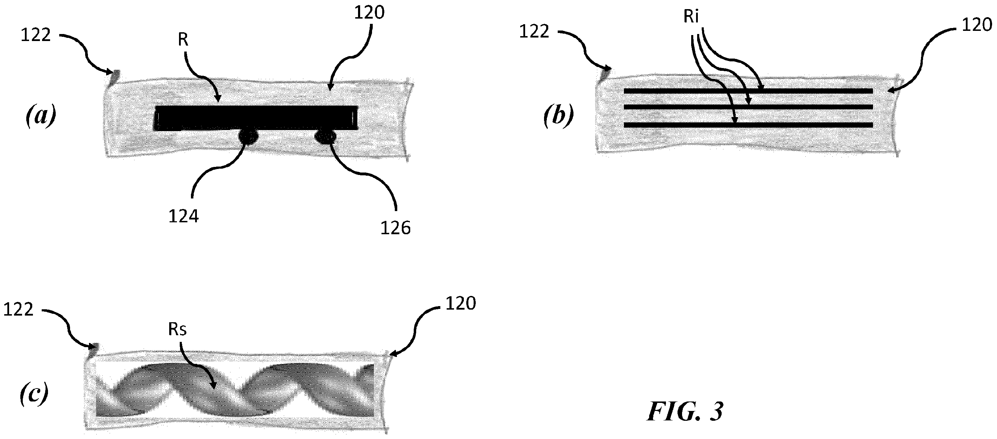

In this manner, the blower, by means of the motor fan, generates a flow of air that, passing through the snow-blower tube 120, is heated by contact with the resistor R. With reference to Figure 3(a), a single resistor R can be provided, which extends linearly and longitudinally along the snow-blower tube 120. Alternatively, as shown in Figure 3(b), a plurality of resistors Ri is provided, distanced and distributed longitudinally along the snow-blower tube 120. Alternatively, as shown in Figure 3(c), it is possible to consider a spiral resistor Rs, which extends internally in the snow-blower tube 120.

In this manner, the air generated by the motor 102 through the fan 104 is heated as it passes through the snow-blower tube 120 and exits at a temperature that melts the snow onto which it is directed.

A temperature sensor 124 arranged in the snow-blower tube 120 and a thermostat 126 can be provided to control the temperature.

In alternative embodiments, modification kits to be applied to existing blowers may be provided.

In this case, it is necessary to set up an external resistor to heat the air exiting leaf-blower tube 110.

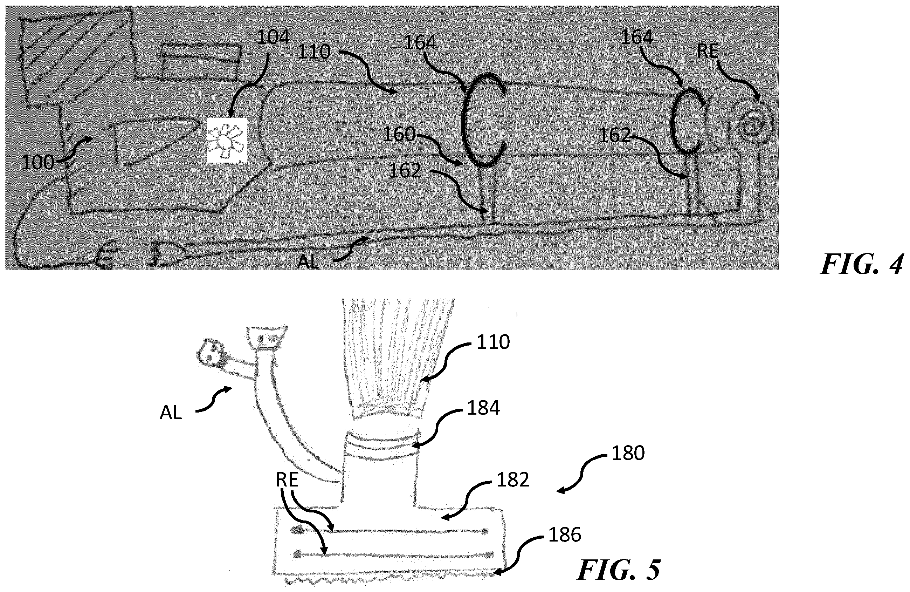

In a first variant shown in Figure 4, a supporting structure 160 can be provided to be anchored externally to the leaf-blower tube 110 to hold and support a resistor RE adapted to heat the air directly exiting the blower.

For example, the supporting structure 160 may include a pair of fixing rods 162 to be connected externally to the leaf-blower tube 110. The fixing rods 162 can provide interference fit by means of deformable elastic clips 164 in order to accommodate the size of the leaf-blower tube 110. Otherwise, Velcro ties (not shown) can be provided to connect the fixing rods 162 to the leaf-blower tube 110.

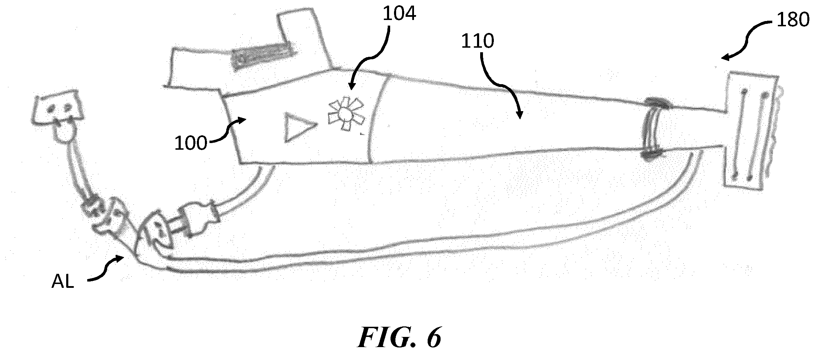

In alternative embodiments, shown in Figures 5 and 6, the supporting structure of the resistor RE may be expected to be an accessory 180 to be connected to the free terminal end of the leaf-blower tube 110. In this case, the modification kit fits blowers already on the market or already purchased by users. In this manner, it is possible to turn a leaf-blower into a snow blower.

Preferably, the accessory 180 is in the form of a nozzle 182 with a tubular attachment 184 with an adjustable ring nut to fit different sizes of leaf-blower tube terminals 110. Indeed, typically, the tubes are slightly conical in shape with varying diameters. The nozzle 182 has a substantially rectangular shape and one or more resistors RE extend longitudinally along the long sides so as to heat the air exiting the leaf-blower tube 110. A protective grid 186 may be provided in some embodiments.

A power supply AL must be provided to supply current to the resistor RE, e.g., using a two-way plug adapter.

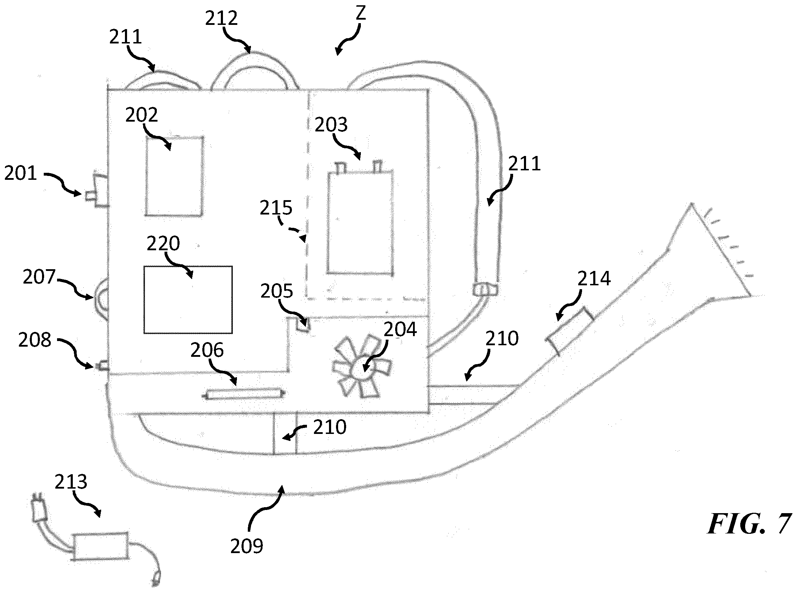

With reference to Figure 7, a blower with batteries inserted in a backpack can be provided. In particular, the machine body and batteries can be arranged so that they can be easily transported in a backpack.

In detail, the backpack Z comprises the machine body provided with an electric motor 220, an electronic board 202, a rechargeable battery 203 to power the motor 220, and a fan 204 driven by the electric motor 220.

The backpack blower provides a three-position 201 switch, with which the type of operation is selected: if the "0" position is selected, the blower is off, if position 1 is selected, it is a conventional leaf-blower, and if position "2" is selected, the snow blower function is activated instead.

The fan 204 is connected to a flexible tube 209 for the exiting air.

In particular, by setting the switch 201 in position "1" the electric motor 220, powered by the battery 203, activates the fan 204 controlled by means of the control unit 202. In this condition, normal air comes out of the tube 209, and the blower works as a conventional leaf-blower.

Conversely, setting the switch in position "2" will cause the electric motor 220, powered by the battery 203, to activate the fan 204 and resistor 206, both of which are controlled by means of the control unit 202. The resistor 206 heats the air generated by the fan 204, and, therefore, in this condition, heated air exits the tube 209 and the blower works as a snow melter-ice melter.

The backpack Z can be provided with shoulder straps 211 and a handle 212 for easy carrying.

Furthermore, the backpack Z can be provided with spacers 210 of the flexible tube 209 from the backpack Z.

In various embodiments, the backpack Z can be provided with a plug 208 for charging the battery 203. Power for battery charging can be provided through a charger 213.

In various embodiments, a safety probe 205 can be provided near the fan 204 to monitor the temperature and prevent overheating.

Furthermore, by means of an adjustable thermostat 207 it is possible to set the adjustment of heat exiting the flexible tube 209 according to the type of snow or ice to be melted.

A handle 214 can be arranged on the flexible tube 209 to direct the air flow. Finally, a zipper 215 is provided on the backpack Z to allow the user to change the battery 203.

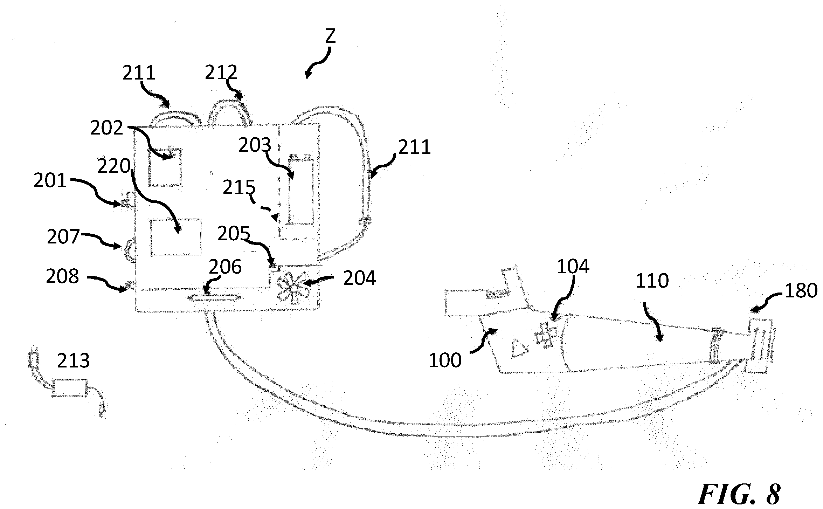

Figure 8 shows an example of a blower provided with the modification kit in Figures 5 and 6 and batteries transported in a backpack Z.

The machine body 100 comprises a fan 104 adapted to generate an air current and is connected to a leaf-blower tube 110, which has a conical end portion.

At the end of leaf-blower tube 110, the supporting structure of the resistor RE is connected, in the form of accessory 180 to be connected on the free terminal end of the leaf-blower tube 110.

Preferably, the accessory 180 is in the form of a nozzle 182 with a tubular attachment 184 with an adjustable ring nut to fit different sizes of leaf-blower tube terminals 110. Indeed, typically, the tubes are slightly conical in shape with varying diameters. The nozzle 182 has a substantially rectangular shape and one or more resistors RE extend longitudinally along the long sides so as to heat the air exiting the leaf-blower tube 110.

In the detail of the embodiment in Figure 8, the backpack Z is similar to the one described in Figure 7.

The description of specific embodiments provided above shows the invention from a conceptual point of view so that others, using the prior art, will be able to modify and/or adapt in various applications those specific embodiments without further research and without departing from the inventive concept, and, thus, it is understood that such adaptations and modifications will be considered as equivalents of the specific embodiments.

The means and materials for achieving the various functions described may be of various nature, without departing from the scope of the invention.

It is worth noting that terminology or expressions used are only descriptive and therefore non-limiting.

Obviously, without prejudice to the principle of the invention, the construction details and the embodiments can widely vary with respect to that described and illustrated above by way of example, without however departing from the scope of the present invention.

Where the constructive features and techniques mentioned in the claims below are followed by references signs or numerals, such reference signs were introduced for the sole purpose of increasing the intelligibility of the claims themselves, and therefore, such reference signs have no limiting effect on the interpretation of each element identified, by way of example only, by such reference signs.

## Claims

1. A blower, also adapted for blowing and melting the snow, comprises a machine body (100,Z), to which a leaf-blower tube (110) can be connected, wherein a motor (102,220) is present in the machine body (100,Z) provided with a fan (14,104,204) adapted to generate an air current, wherein said blower, by means of the fan (14,104,204) actuated by the motor (102,220), generates an air flow, which, passing through the leaf-blower tube (120,209), is heated by the contact with a resistor (RE) comprised in an accessory (180), wherein said accessory (180) is in the form of a nozzle (182) with a tubular attachment (184) with an adjustable ring nut to be installed on the free end of the leaf-blower tube (110).

2. The blower according to claim 1, wherein said nozzle (182) is substantially rectangular in shape and has inside:
- a single resistor (RE), which extends linearly and longitudinally along the long sides of the nozzle (182), or
- multiple resistors (RE), which extend longitudinally along the long sides of the nozzle (182),
so as to heat the air exiting the leaf-blower tube (110).

3. The blower according to claim 1 or claim 2, wherein a power supply (AL) to supply current to the resistor (RE) is provided.

4. The blower according to claim 3, wherein said power supply (AL) comprises a two-way plug adapter or a battery inserted in a backpack.

5. A modification kit for portable leaf-blowers, which has a supporting structure (160) to be anchored externally to the leaf-blower tube (110) to hold and support a resistor (RE) adapted to heat the air directly exiting the blower and a power supply (AL) to bring current to the resistor (RE), wherein said supporting structure (160) of the resistor (RE) is an accessory (180) to be connected onto the free terminal end of the leaf-blower tube (110) in the shape of a nozzle (182) with a tubular attachment (184) with an adjustable ring nut for adapting to different sizes of the terminals of the leaf-blower tube (110).

6. The modification kit for blowers according to claim 5, wherein said nozzle (182) is substantially rectangular in shape and one or more resistors (RE) extend longitudinally along the long sides so that they heat the air exiting the leaf-blower tube (110).

7. The modification kit for blowers according to claim 5 or claim 6, wherein said power supply (AL) has a two-way plug adapter or a battery inserted in a backpack.
